**Europäisches Patentamt**

**European Patent Office**

**Office européen des brevets**

(19)

(11) **EP 0 762 702 B1**

(12) **FASCICULE DE BREVET EUROPEEN**

(45) Date de publication et mention
de la délivrance du brevet:
**08.02.2006 Bulletin 2006/06**

(51) Int Cl.:
*H04L 27/26* (2006.01)      *H04L 25/02* (2006.01)
*H04L 27/233* (2006.01)

(21) Numéro de dépôt: **96460029.0**

(22) Date de dépôt: **20.08.1996**

(54) **Procédé et dispositif de démodulation d'un signal multiporteur tenant compte d'une estimation de la réponse du canal de transmission et d'une estimation d'une distorsion blanche en fréquence**

Verfahren und Einrichtung zur Demodulation eines Mehrträgersignals, die eine Schätzung der Kanalimpulsantwort und eine Schätzung der weissen Frequenzströmung in Betracht ziehen

Method and apparatus for demodulating a multicarrier signal, taking a channel response estimate and an estimate of white frequency distortion into account

(84) Etats contractants désignés:
**DE ES GB IT SE**

(30) Priorité: **21.08.1995 FR 9510068**

(43) Date de publication de la demande:
**12.03.1997 Bulletin 1997/11**

(73) Titulaires:
- **FRANCE TELECOM**
  **75015 Paris (FR)**
- **TDF**
  **75732 Paris Cedex 15 (FR)**

(72) Inventeurs:
- **Sueur, Bertrand**
  **35000 Rennes (FR)**
- **Combelles, Pierre**
  **35000 Rennes (FR)**

(74) Mandataire: **Vidon, Patrice et al**
**Cabinet Vidon**
**16 B, rue Jouanet - B.P. 90333**
**Technopole Atalante**
**35703 Rennes Cedex 7 (FR)**

(56) Documents cités:
EP-A- 0 441 731          EP-A- 0 453 203
WO-A-93/26096          DE-A- 4 310 031
GB-A- 2 278 257

**Description**

Le domaine de l'invention est celui de la réception de signaux multiporteuses. Plus précisément, l'invention concerne l'optimisation de la démodulation des symboles modulant de tels signaux.

L'invention s'applique à tous les types de signaux mettant en oeuvre une pluralité de fréquences porteuses, c'est-à-dire aux systèmes mettant en oeuvre des signaux transmis selon la technique de multiplexage par répartition en fréquence (en anglais : Frequency Division Multiplex (FDM)), et par exemple le système COFDM (Coded Orthogonal Frequency Division Multiplex (multiplexage de fréquences orthogonales codées)), mis en oeuvre notamment dans le cadre du projet européen Eurêka 147 "DAB" (Digital Audio Broadcasting (diffusion audionumérique)), et également pressenti pour la transmission de signaux de télévision.

Dans de tels systèmes de transmission, les données source à transmettre sont organisées en symboles (constitués d'une ou plusieurs données source) modulant chacun, pendant un intervalle de temps prédéterminé, une fréquence porteuse choisie parmi une pluralité de porteuses. Le signal formé par l'ensemble des porteuses modulées est transmis vers un ou plusieurs récepteurs, qui reçoivent un signal émis pertubé par le canal de transmission.

La démodulation consiste généralement, dans son principe, à estimer la réponse du canal de transmission pour chaque symbole, puis à diviser le signal reçu par cette estimation pour obtenir une estimation du symbole émis.

On connaît de nombreuses techniques de démodulation, qui peut être différentielle ou cohérente. Une technique facilitant la démodulation cohérente à l'aide de symboles de référence connus des récepteurs et régulièrement insérés parmi les symboles utiles est par exemple décrite dans le brevet FR-94 07984 au nom des mêmes déposants.

Le document de brevet EP-441731, également au nom des mêmes déposants, présente un exemple de distribution de ces pilotes, en quinconce, dans l'espace temps-fréquence.

Le problème majeur de ces techniques connues est que l'estimation de la réponse du canal obtenue n'est pas toujours exacte ni précise, car elle peut être perturbée par une distorsion blanche en fréquence souvent -mais pas seulement- induite par le récepteur.

En d'autres termes, en convenant de noter, dans un système multiporteuse, n l'indice temporel et k l'indice fréquentiel (n et k apparteant à Z), à l'émission, chaque porteuse k d'un symbole n est donc modulée par un symbole $C_{n,k}$ complexe.

Si l'on note $H_{n,k}$ la réponse complexe du canal de transmission, alors on reçoit :

$$Y_{n,k} = H_{n,k} \cdot C_{n,k} \cdot \emptyset_n + \text{bruit blanc} \quad (1)$$

Le bruit blanc est un terme que l'on néglige par la suite, par souci de simplicité de l' exposé.

$\emptyset_n$ est un terme complexe, a priori variable en phase et amplitude qui ne dépend que de n, et décrit donc n'importe quelle distorsion "blanche" en fréquence qui entache le signal reçu. Les $\emptyset_n$ sont supposés peu corrélés de symbole en symbole. Typiquement mais non exclusivement, $\emptyset_n$ est le bruit de phase du tuner.

Le recouvrement par le récepteur de l'information $C_{n,k}$ transmise implique de savoir isoler le terme $C_{n,k}$ à partir de l'équation (1), par division du $Y_{n,k}$ reçu par une valeur estimée de $H_{n,k} \cdot \emptyset_n$.

Une façon souvent utilisée pour faciliter la démodulation cohérente du signal reçu consiste à insérer à l'émission dans la trame des "pilotes" (ou symboles de référence), c'est-à-dire à émettre pour certaines valeurs de k et de n - prédéterminées à l'avance et connues du récepteur - des valeurs $C_{n,k}$ particulières a priori connues du récepteur.

On les note par la suite $P_{n,k}$, la notation $C_{n,k}$ étant réservée aux vecteurs a priori inconnus du récepteur, c'est-à-dire porteurs d'information.

Bien sûr, pour des raisons de maximalisation du débit utile transmis, le nombre de vecteurs $C_{n,k}$ sacrifiés en $P_{n,k}$ doit être aussi faible que possible. On peut convenir de noter $\mathbf{P}^2$ le sous ensemble de $\mathbf{Z} \times \mathbf{Z}$ des couples (n,k) tels que la porteuse indicée k du symbole n porte un pilote $P_{n,k}$.

Puisque $P_{n,k}$, est par hypothèse connu du récepteur, celui-ci peut calculer la division $Y_{n,k}/P_{n,k}$ et obtenir ainsi une estimation du produit $H_{n,k} \cdot \emptyset_n$ - notée $D_{n,k}$ (D comme distorsion) dans la suite - par tous les couples (n, k) de P2.

Les valeurs $D_{n0,k0}$ pour toutes les valeurs $n_0$ et $k_0$ possibles dans $\mathbf{Z}$ sont ensuite calculées par le récepteur par interpolation et/ou extrapolation des valeurs $D_{n,k}$, avec (n,k) appartenant à $\mathbf{P}^2$.

L'état de l'art consiste à définir la fonction $f(n_0,k_0)$ de calcul de $D_{n0,k0}$, à partir des $D_{n,k}$, (n,k) appartenant à $\mathbf{P}^2$.

Un problème majeur, détecté par les inventeurs mais non expressément connu de l'homme du métier, vient du fait que le $D_{n0,k0}$ ainsi estimé ne permet pas de distinguer chacun des deux termes du produit : $D_{n0,k0} = H_{n0,k0} \cdot \phi_{n0,k0}$, où $H_{n0,k0}$ désigne ce qu'aurait été le résultat de $f(n_0,k_0)$ si tous les $D_{n,k}$ ($=H_{n,k} \cdot \emptyset_n$) servant de base au calcul vérifiaient $\emptyset_n = 1$, c'est-à-dire en l'absence de toute distorsion blanche en fréquences.

Une méthode pour se débarasser du terme $\phi_{n0,k0}$ pourrait consister à filtrer fortement temporellement (c'est-à-dire suivant l'indice n), $D_{n,k}$ où (n,k) appartient à P2 à l'occasion du calcul de $f(n_0,k_0)$. Dans ces conditions, on a bien $\phi_{n0,k0} \approx 1$.

Malheureusement, et inévitablement, ce filtrage temporel affecte aussi le terme $\hat{H}_{n0,k0}$ qui cesse dès lors d'être une estimation acceptable de la réponse fréquentielle complexe du canal (à l'instant $n_0$ et pour la porteuse $k_0$), si celui-ci n'est pas suffisamment stationnaire.

On connait également, par le document EP 453 203 une technique de correction d'horloge, de fréquence et de phase dans un modem mutiporteuse. Il concerne cependant spécifiquement des communications point à point, ce qui permet de prévoir deux modes de fonctionnement : un mode d'initialisation (pendant lequel seulement deux porteuses sont applicable dans le cadre de la présente invention.

L'invention a notamment pour objectif de pallier ces inconvénients.

Ainsi, un objectif de la présente invention est de fournir un procédé de démodulation d'un signal multiporteuse, et un dispositif correspondant, permettant d'optimiser la démodulation des symboles formant le signal reçu.

Plus précisément, l'invention a pour objectif de fournir un tel procédé, tenant compte des distorsions induites par les récepteurs.

Un autre objectif de l'invention est de fournir un tel procédé de démodulation, dans lequel l'estimation de la réponse du canal de transmission est optimisée, quelques soient les distorsions induites par les récepteurs.

Ces objectifs, ainsi que d'autres qui apparaîtront par la suite, sont atteints selon l'invention par un procédé de démodulation d'un signal multiporteuse selon la revendication 1.

Ainsi, selon l'invention, on détermine deux valeurs, en absolu, représentant précisément respectivement la réponse du canal de transmission et les distorsions blanches en fréquences, puis on détermine par division une estimation du symbole reçu. Cette technique est tout à fait nouvelle pour l'homme du métier, dont l'objectif est, selon l'état de l'art de limiter, en relatif, l'effet des distorsions.

Le traitement de suppression peut avantageusement comprendre en outre une étape de filtrage d'interpolation temporelle, pour chacune desdites fréquences porteuses portant des éléments de référence, de façon à associer à chaque porteuse placée entre deux éléments de référence sur ladite fréquence porteuse une donnée intermédiaire $D_{n0,k}$.

Il est à noter que c'est la répartition particulière des symboles de référence, en quinconce, et non orthogonale, qui permet de supprimer de façon efficace le terme dû à la distorsion, en assurant une bonne décorrélation, comme on le verra par la suite.

Avantageusement, ladite étape de filtrage d'interpolation fréquentielle met en oeuvre un filtre à réponse impulsionnelle finie de longueur N sensiblement égale à la période de répétition des éléments de référence sur une fréquence porteuse donnée.

Selon une caractéristique préférentielle de l'invention, ladite seconde information $\hat{\hat{\phi}}_{n_0}$ est obtenue à partir de la division $\delta_{n0+i,k}$ de la donnée $D_{n0+i,k}$ par ladite première information $\hat{\hat{H}}_{n_0,k}$ (i entier petit éventuellement nul).

En d'autres termes, après avoir supprimé le terme $\phi$, on le recalcule, par comparaison avec l'information de base.

De façon avantageuse, afin de conserver l'hypothèse de stationnarité du canal, i vaut -1, 0 ou 1.

Préférentiellement, ladite seconde information $\hat{\hat{\phi}}_{n_0}$ est une moyenne pondérée d'au moins deux desdites divisions $\delta_{n0+i,k}$.

Alors, la seconde information $\hat{\hat{\phi}}_{n_0}$ vaut :

$$\hat{\hat{\phi}}_{n_0+i} = \frac{\sum_{k} \alpha_{k}.\delta_{n_0+i,k}}{\sum_{k} \alpha_{k}}$$

avec :

$$\alpha_{k} = \left\| \hat{\hat{H}}_{n_0,k} \right\|^2$$

L'invention concerne également un dispositif de démodulation d'un signal multiporteuse selon la revendication 8.

D'autres caractéristiques et avantages de l'invention apparaîtront à la lecture de la description suivante d'un mode de réalisation préférentiel de l'invention, donné à titre de simple exemple illustratif et non limitatif, et des dessins annexés, dans lesquels :

- la figure 1 illustre de façon générale le procédé de démodulation de l'invention ;
- les figures 2 et 3 illustrent deux structures avantageuses de répartition des symboles de référence dans l'espace temps-fréquence ;
- la figure 4 est un synoptique simplifié d'un dispositif de démodulation selon l'invention.

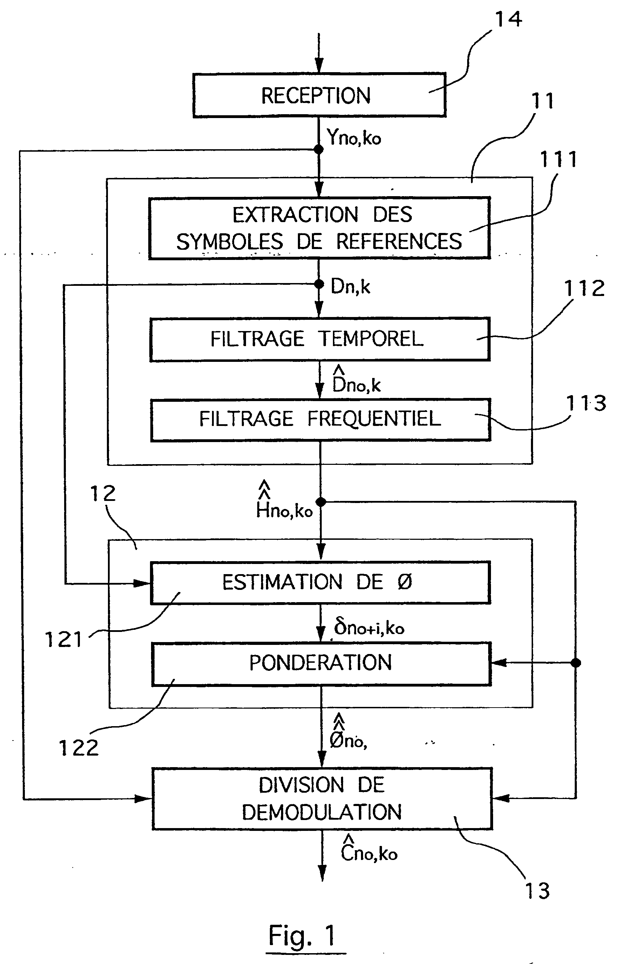

Comme cela a déjà été indiqué, et comme cela est illustré en figure 1, le principe général de l'invention consiste à déterminer (11) une estimation absolue $\hat{\hat{H}}_{n_0,k_0}$ de la réponse du canal de transmission, puis (12) une estimation absolue $\hat{\hat{\phi}}_{n_0}$ de la distorsion induite par le récepteur, et enfin à diviser (13) le symbole reçu par ces deux estimations.

Il est à noter que cette approche est nouvelle, et non triviale. En effet, les deux estimations sont généralement connues sous la forme d'un produit unique indissociable, et la technique antérieure vise, au mieux, à limiter l'effet de la distorsion sur ce produit. Selon l'invention, en revanche, on propose de déterminer indépendamment les deux valeurs, afin d'optimiser le résultat de la démodulation.

La méthode préférentielle permettant d'obtenir ces deux valeurs est également non évidente pour l'homme du métier. Elle consiste dans un premier temps à supprimer l'effet de la distorsion Ø sur l'estimation D du produit, par la mise en oeuvre d'une répartition particulière de symboles de référence (structure dite par la suite structure en quinconce, par opposition à la structure classique orthogonale) et d'un filtrage adéquat, puis à recalculer une estimation absolue de la distorsion.

Ainsi, en référence à la figure 1, on reçoit (14) le signal transmis, sous la forme de complexes $Y_{n0,k0}$. On analyse (111) les porteuses reçues correspondant aux porteuses de référence, afin de déterminer les estimations $D_{n,k}$ correspondantes. On effectue ensuite optionnellement un filtrage temporel 112 permettant d'obtenir les estimations $D_{n0,k}$ comprises entre deux $D_{n,k}$ consécutifs, sur une porteuse k donnée.

Enfin, on effectue un filtrage fréquentiel 113 sur ces estimations $\hat{D}_{n0,k}$. Comme on le verra plus précisément par la suite, du fait de la répartition en quinconce des symboles de référence, les estimations $D_{n0,k}$ sont basées sur des symboles de référence transmis à des instants de transmission différents, et donc fortement décorélés du point de vue des distorsions blanches en fréquence. En conséquence, le filtrage 113 permet de supprimer, ou au moins de fortement atténuer, l'effet de cette distorsion, et délivre donc des estimations précises de la réponse du canal de transmission $\hat{\hat{H}}_{n_0,k_0}$.

A partir de cette estimation $\hat{\hat{H}}_{n_0,k_0}$, on recalcule (12) selon l'invention une estimation de la distorsion $\hat{\hat{\phi}}_{n_0}$. Pour cela, on divise (121) la valeur $D_{n0+i,k}$ par $\hat{\hat{H}}_{n_0,k}$. Avantageusement, le résultat de cette division est moyenné et pondéré (122), afin de réduire le bruit.

Enfin, on peut estimer (13) précisément le complexe reçu, en divisant $Y_{n0,k0}$ par le produit $\hat{\hat{H}}_{n_0,k_0} \cdot \hat{\hat{\phi}}_{n_0}$.

On décrit maintenant de façon plus précise les opérations à effectuer.

On choisit la loi $f(n_0,k_0)$ déjà mentionnée de façon que deux valeurs estimées $\hat{D}_{n0,k0} = \hat{H}_{n0,k0} \cdot \phi_{n0,k0}$ et $D_{n0,k1} = H_{n0,k1} \cdot \phi_{n0,k1}$ correspondant au même indice temporel no et à deux indices fréquentiels $k_0$ et $k_1$ proches (typiquement $1 \leq |k_0 - k_1| \leq 16$) soient calculés (par f) respectivement à partir des $D_{n,k0}$ $(n,k_0)$ appartenant à $\mathbf{P}^2$ et des $D_{m,k1}$ $(m,k_1)$ appartenant à $\mathbf{P}^2$ choisis tels que les sous-ensembles des n et m soient le plus disjoints possibles. En d'autres termes, les $D_{n,k0}$ et $D_{m,k1}$ doivent être issus (par division des $Y_{n,k0}/P_{n,k0}$ et $Y_{m,k1}/P_{m,k1}$ de symboles différents, pour que l'hypothèse de quasi-décorrélation des $Ø_n$ de symbole en symbole reste valide entre $\phi_{n0,k0}$ et $\phi_{n0,k1}$.

Les $\phi$ nécessitent désormais l'adjonction des deux indices temporel et fréquentiel, alors que les $Ø_n$ étaient blancs en fréquence. Il reste alors à filtrer fréquentiellement les $D_{n0,k0} = H_{n0,k0} \cdot \phi_{n0,k0}$ par une fonction notée $g_{n0,l0}$, pour éliminer le terme $\phi_{n0,k0}$ sans qu'aucune hypothèse ne soit nécessaire sur les variations temporelles du canal.

L'hypothèse gênante de stationnarité du canal, nécessaire en l'absence de l'invention, et qui suppose une corrélation temporelle forte entre $H_{n,k}$ et $H_{n+1,k}$ pour tout n et tout k de $\mathbf{Z}$ est remplacée par une hypothèse de corrélation fréquentielle entre $H_{n,k}$ et $H_{n,k+1}$, qui est d'autant mieux vérifiée que l'étalement temporel de la réponse impulsionnelle du canal est faible (échos courts devant la durée symbole).

Puisque l'on obtient une estimation de $\hat{\tilde{H}}_{n_0,l_0}$ pour tout $n_0$ et $l_0$ de **Z**, l'estimation $\hat{\tilde{H}}_{n_0,k}$ peut être comparée à $D_{n0 + i,k} = H_{n0 + i,k} \cdot \phi_{n0+i}$ (i sera avantageusement choisi petit, typiquement i = 0 ou $\pm$ 1, pour que l'hypothèse de stationnarité du canal durant |i| + 1 symboles soit vraie, c'est-à-dire que $\hat{\tilde{H}}_{n_0,k} \approx H_{n_0+i,k}$ pour toutes les valeurs de k telles que le couple ($n_{0+i,}$ k) corresponde à l'émission de pilotes.

Le quotient :

$$\delta_{n_0+i,k} = \frac{D_{n_0+i,k}}{\hat{\tilde{H}}_{n_0,k}} \qquad (2)$$

fournit une 1ère estimation de $\phi_{n0+i}$, notée $\hat{\phi}_{n0+i}$.

Optionnellement, une moyenne pondérée de ces $\delta_{n0+i,k}$ selon l'indice k donne alors une seconde estimation moins bruitée de $\phi_{n0+i}$, notée $\hat{\hat{\phi}}_{n_0+i}$. Cette moyenne s'écrit par exemple :

$$\hat{\hat{\phi}}_{n_0+i} = \frac{\sum_k \alpha_k \cdot \delta_{n_0+i,k}}{\sum_k \alpha_k} \qquad (3)$$

avec par exemple :

$$\alpha_k = \left\| \hat{\tilde{H}}_{n0,k} \right\|^2$$

le couple ($n_0$+i,k) correspondant à l'émission d'un pilote.

A la réception du symbole $n_0$+i, les valeurs reçues :

$$Y_{n_0+i,k_0} = H_{n_0+i,k_0} \cdot \phi_{n_0+i} \cdot C_{n_0+i,k_0} + bruit$$

permettent enfin d'estimer correctement $C_{n0 +i,k0}$, comme suit :

$$C_{n_0+i,k_0} \approx \frac{Y_{n_0+i,k_0}}{\hat{\tilde{H}}_{n_0+i,k_0} \cdot \hat{\hat{\phi}}_{n_0+i}} \qquad (4)$$

Dans le choix de la structure d'insertion des pilotes (c'est-à-dire le choix des porteuses k et des symboles n sur lesquels on insère des pilotes), on évitera donc les structures orthogonales définies par :

$$(n,k) \in \mathbf{P2} <=> n = \text{constante (modulo N)}$$

$$\text{et } k = \text{constante (modulo K)}$$

N et K sont des constantes entières choisies de façon cohérente avec le théorème d'échantillonnage de Shannon. Les pilotes sont dans cette structure orthogonale insérés dans un symbole sur N, et sur une porteuse sur K. N est choisi en fonction de la vitesse de variation du canal (typiquement N=4 ou 8) tandis que K vérifie :

$$K \leq \text{(durée utile du symbole/durée de l'intervalle de garde)}$$

Le schéma orthogonal est à éviter, car $\hat{D}_{n0,k0}$ et $\hat{D}_{n0,k1}$ (avec par exemple $k_1=k_0+4$) sont habituellement calculés par interpolation/extrapolation à partir des $D_{n,k0}$, avec $(n, k_0)$ appartenant à $\mathbf{P}^2$ et $D_{m,k1}$, $(m, k_1)$ appartenant à $\mathbf{P}^2$ respectivement. Or, dans ce cas, les n et les m sont identiques modulo N. En d'autres termes, les symboles dont sont issus les $D_{n,k0}$ et $D_{m,k1}$ qui servent de base au calcul de $D_{n0,k0}$ et $D_{n0,k1}$ sont les mêmes et sont donc affectés de la même distorsion $\varnothing_n = \varnothing_m$. Il en résulte que $D_{n0,k0} = H_{n0,k0}.\phi_{n0,k0}$ et $D_{n0,k1} = H_{n0,k1}.\phi_{n0,k1}$ sont affectés du même biais $\phi_{n0,k0} = \phi_{n0,k1}$, dont on ne pourra dès lors pas se débarraser par filtrage fréquentiel (selon l'axe k) ultérieur.

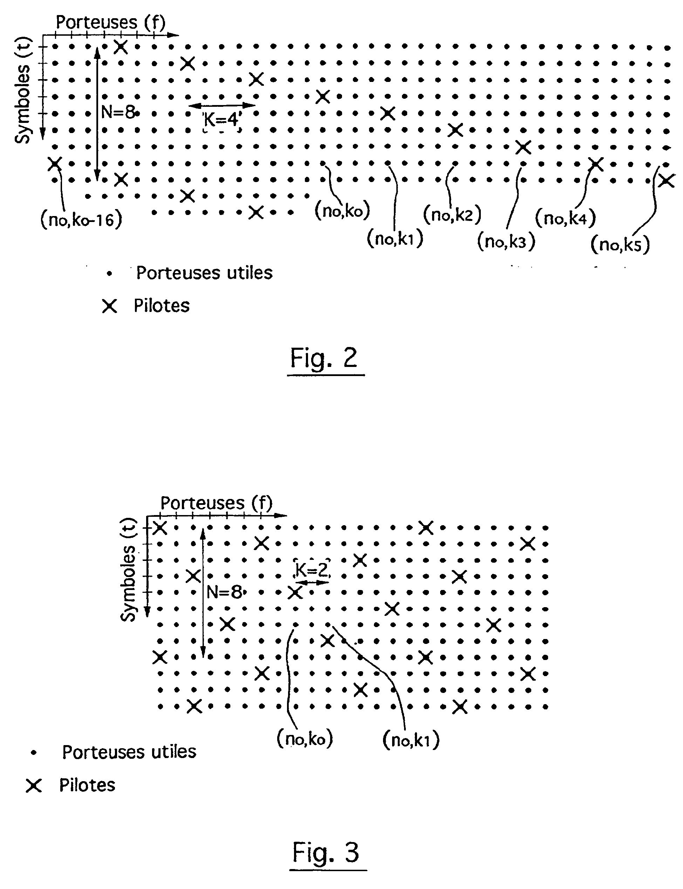

Il faut donc choisir une structure d'insertion des pilotes en quinconce, et non plus orthogonale, comme illustrée en figures 2 et 3.

Dans ces schémas, $(n,k) \in \mathbf{P}^2 <=> n = \text{cste}(k)$ [modulo N]

C'est-à-dire que l'indice n du symbole qui porte les pilotes dépend de k.

La figure 2 illustre le cas où :

$$\text{cste}(k) = \frac{k \text{ modulo } NK}{K}$$

La figure 3 illustre un cas légèrement différent, mais équivalent du point de vue de l'invention.

Il est à noter que le nombre de pilotes n'est pas augmenté, par rapport à une structure orthogonale classique, et que N et K restent identiques par rapport à cette structure (N=8 et K=4 dans l'exemple décrit plus haut et la figure 2), voire inférieurs (N=8 et K=2 dans le cas de la figure 3).

Revenons à l'exemple de la figure 2, par souci de simplicité dans la suite.

Il faut calculer par interpolation et/ou extrapolation $D_{n0,k0}$ et $D_{n0,k1}$.

Par exemple :

$$\begin{cases} \hat{D}_{n_0,k_0} = \frac{1}{2}.D_{n_0-4,k_0} + \frac{1}{2}.D_{n_0+4,k_0} = \hat{H}_{n_0,k_0}.\hat{\phi}_{n_0,k_0} \\ \hat{D}_{n_0,k_1} = \frac{5}{8}.D_{n_0-3,k_1} + \frac{3}{8}.D_{n_0+5,k_1} = \hat{H}_{n_0,k_1}.\hat{\phi}_{n_0,k_1} \end{cases}$$

Il importe de remarquer que c'est bien ici le choix de la structure non orthogonale qui permet d'affirmer que $\phi_{n0,k0}$ et $\phi_{n0,k1}$, issus de calculs basés repectivement sur des $D_{n,k0}$ et des $D_{m,k1}$ tels que n et m soient différents (n=$n_0$-4 ou $n_0$+4 tandis que m = $n_0$-3 ou $n_0$+5) sont peu corrélés.

On calcule pareillement tous les $D_{n0,k0+pK}$ où p appartient à $\mathbf{Z}$.

Puisque $\phi_{n0,k0}$ et $\phi_{n0,k0+pK}$ restent décorrélés (au moins tant que $0 \leq p < N$), un filtre fréquentiel par exemple du type à réponse impulsionnelle finie (FIR) d'interpolation des $\hat{\hat{D}}_{n_0,k}$ (où k est quelconque dans $\mathbf{Z}$) à partir des $\hat{D}_{n0,k0+pK}$ élimine (au moins dans sa plus grande partie) le terme de distorsion $\varnothing$.

En d'autres termes, le filtre produit une estimation :

$$\hat{\hat{D}}_{n_0.k} = \hat{\hat{H}}_{n_0.k} \cdot \hat{\hat{\phi}}_{n_0.k_0} \text{ telle que } \hat{\hat{\phi}}_{n_0.k_0} \approx 1$$

Donc:

$$\hat{\hat{D}}_{n_0,k} \approx \hat{\hat{H}}_{n_0,k}$$

Il est avantageux, mais non indispensable, d'adapter la longueur du filtre FIR d'interpolation fréquentielle à la valeur N.

Par exemple, si le filtre est de longueur N, c'est-à-dire si $\hat{\hat{D}}_{n_0,k}$ est interpolé à partir de N valeurs $\hat{\hat{D}}_{n_0,k_0+pK}$, avec $0 \le p < N$, le filtrage de la distorsion Ø sera maximal.

Dans l'exemple de la figure 2, $k_{5K} = k_{0+5K} = k_{0+20}$.

Le filtre FIR produit en particulier $D_{n0,k5}$, qu'on pourra comparer à $D_{n0+1,k5}$ (dans cette application préférentielle, on a choisi i=1). On a alors :

$$\delta_{n_0+1,k_s} = \frac{D_{n_0+1,k_s}}{\hat{\hat{D}}_{n_0,k_s}} \approx \frac{H_{n_0+1,k_s} \cdot \phi_{n_0+1}}{\hat{\hat{H}}_{n_0,k_s}} \approx \hat{\phi}_{n_0+1}$$

sous l'hypothèse raisonnable que le canal H a peu varié entre les symboles $n_0$ et $n_0+1$.

Le même calcul :

$$\delta_{n_0+1,k_s+qNP} = \delta_{n_0+1,k_s+32q}$$

où q appartient à **Z** peut se répéter pour un nombre suffisant de valeurs de q, de façon à obtenir un nombre suffisant d'estimation $\phi_{n0+1}$ susceptibles d'alimenter un calcul de type sommation pondérée comme suit :

$$\hat{\hat{\phi}}_{n_0+1} \approx \frac{\sum_q \left\| H_{n_0+1,k_s+32q} \right\|^2 \cdot \delta_{n_0+1,k_s+32q}}{\sum_q \left\| H_{n_0+1,k_s+32q} \right\|^2}$$

Alors, les $c_{n0+1,k0}$, pour tout $k_0$ émis, peuvent être estimés en réception sans le biais apporté par la distorsion $Ø_{n0+1}$ comme suit :

$$C_{n_0+1,k_0} \approx \hat{C}_{n_0+1,k_0} = \frac{Y_{n_0+1,k_0}}{\hat{\hat{H}}_{n_0+1,k_0} \cdot \hat{\hat{\phi}}_{n_0+1}}$$

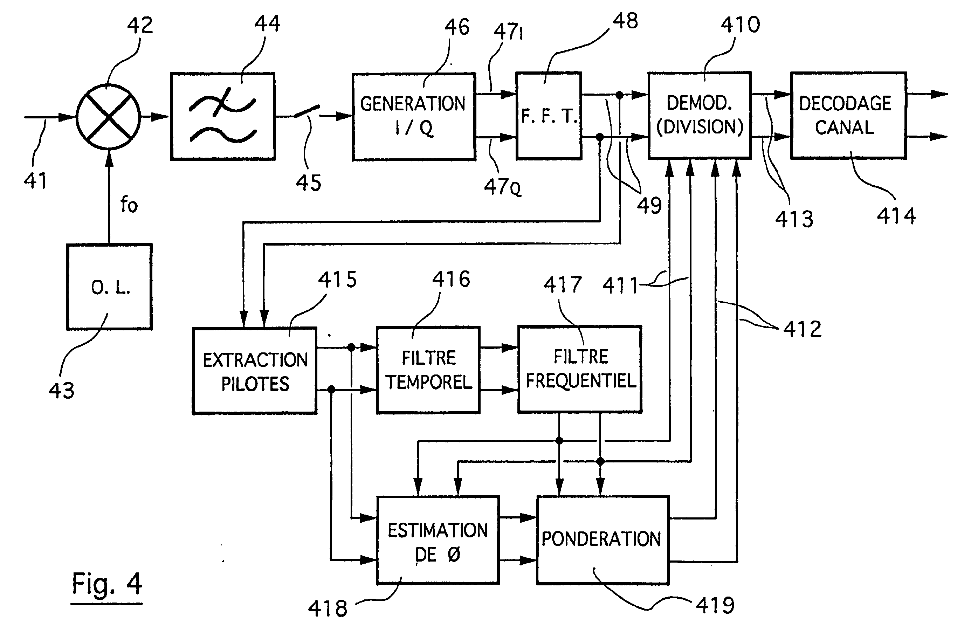

La figure 4 illustre de façon simplifiée un récepteur mettant en oeuvre l'invention.

Le signal reçu 41 est tout d'abord transposé en fréquence basse, par un multiplieur 42 contrôlé par un oscillateur local 43 délivrant la fréquence de transposition $f_0$. Puis le signal transposé est filtré par un filtre passe-bas ou passe-bande 44, et converti en un signal numérique par un échantillonneur 45. Ensuite, un module 46 de génération des composantes en phase et en quadrature délivre les voies $47_I$ et $47_Q$.

Dans le cas du COFDM, les voies I et Q sont soumises à une transformation mathématique F.F.T. 48, qui délivre les échantillons 49 $Y_{n0,k0}$.

Les $Y_{n0,k0}$ 49 sont démodulés (410) selon le procédé décrit précédemment, par division par $\hat{\hat{H}}_{n_0,k_0}$ 411 et $\hat{\hat{\phi}}_{n_0}$ 412 pour fournir les symboles estimés $\hat{C}_{n0,k0}$ 413, qui subissent ensuite classiquement un décodage canal 414, puis la suite du traitement jusqu'à la restitution du signal source.

Les $Y_{n0,k0}$ 49 alimentent un module 415 d'extraction des pilotes qui calcule les valeurs $D_{n,k}$ qui subissent éventuellement un premier filtrage temporel 416 puis un second filtrage fréquentiel 417 pour fournir $\hat{\hat{H}}_{n_0,k_0}$ 411 au démodulateur 410. Par ailleurs, un module 418 d'estimation de Ø compare $D_{n0+i,k}$ et $\hat{\hat{H}}_{n_0,k}$. Un module 419 de pondération calcule l'estimation $\hat{\hat{\phi}}_{n_0}$ 412 en tenant compte de $\left|\hat{\hat{H}}_{n_0,k}\right|$.

Dans la pratique, les différents modules, ou au moins certains d'entre eux, peuvent bien sûr être regroupés dans un calculateur unique. Par ailleurs, il est clair que d'autres modes de réalisation peuvent être envisagés.

## Revendications

**1.** Procédé de démodulation d'un signal multiporteuse formé d'une succession temporelle de symboles modulant une pluralité de fréquences porteuses, pendant un intervalle de temps donné,
**caractérisé en ce qu'**il comprend les étapes suivantes :

- détermination, pour chacun desdits symboles et chacune desdites porteuses, d'une première information $\hat{\hat{H}}_{n_0,k_0}$ représentative d'une estimation de la réponse du canal de transmission, $n_0$ représentant l'indice de l'instant d'émission et $k_0$ représentant l'indice de ladite fréquence porteuse, comprenant les sous-étapes suivantes :

- calcul d'une première donnée de démodulation $\hat{H}_{n0,k} \cdot \phi_{n0,k}$, correspondant au produit d'un terme correspondant à l'estimation de la réponse du canal de transmission et d'un terme correspondant à l'estimation de la distorsion blanche en fréquence ;
- suppression dudit terme correspondant à l'estimation de la distorsion blanche en fréquence, en tenant compte de porteuses de référence $P_{n,k}$ connues des récepteurs, réparties en quinconce parmi les porteuses émises, à des instants et sur des fréquences porteuses prédéterminés, de façon qu'au moins certaines desdites fréquences porteuses portent régulièrement des éléments de référence, à des instants différents pour des fréquences porteuses voisines, puis en appliquant un filtrage d' interpolation comprenant :

- un filtrage d'interpolation temporelle, pour chacune desdites fréquences porteuses portant des éléments de référence, de façon à associer à chaque porteuse placée entre deux éléments de référence sur ladite fréquence porteuse une donnée intermédiaire $\bar{D}_{n0,k}$,
- un filtrage d'interpolation fréquentielle, pour chacun desdits intervalles de temps, desdites données intermédiaires $\hat{D}_{n0,k}$, de façon à produire ladite première information $\hat{\hat{H}}_{n_n,k_0}$,

- détermination, pour chacun desdits intervalles de temps, d'une seconde information $\hat{\hat{\phi}}_{n_0}$ représentative d'une estimation de la distorsion blanche en fréquence, en tenant compte desdits symboles de référence ; et

- division de chaque symbole à démoduler $Y_{n0,k0}$ par ladite première information $\hat{\hat{H}}_{n_0,k_0}$ et par ladite seconde information $\hat{\hat{\phi}}_{n_0}$, pour délivrer un symbole estimé $\hat{C}_{n0,k0}$.

**2.** Procédé selon la revendication 1, **caractérisé en ce que** ladite étape de filtrage d'interpolation fréquentielle met en oeuvre un filtre à réponse impulsionnelle finie de longueur N sensiblement égale à la période de répétition des

EP 0 762 702 B1

éléments de référence sur une fréquence porteuses donnée.

3. Procédé selon l'une quelconque des revendications 1 et 2, **caractérisé en ce que** ladite seconde information $\hat{\tilde{\phi}}_{n_0}^-$ est obtenue à partir de la division $\delta_{n0+l,k}$ de la donnée intermédiaire $\hat{D}_{n0+i,k}$ par ladite première information $\hat{\tilde{H}}_{n_0,k_0}$.

4. Procédé selon la revendication 3, **caractérise en ce que** i vaut -1,0 ou 1.

5. Procédé selon l'une quelconque des revendications 3 et 4, **caractérisé en ce que** ladite seconde information $\hat{\tilde{\phi}}_{n_0}^-$ est une moyenne pondérée d'au moins deux desdites divisions $\delta_{n0+l,k}$.

6. Procédé selon la revendication 5, **caractérisé en ce que** ladite seconde information $\hat{\tilde{\phi}}_{n_0}$ vaut:

$$\hat{\tilde{\phi}}_{n_0+i} = \frac{\sum_k \alpha_k . \delta_{n_0+i,k}}{\sum_k \alpha_k}$$

avec :

$$\alpha_k = \left\| \hat{\tilde{H}}_{n_0,k_0} \right\|^2$$

7. Dispositif de démodulation d'un signal multiporteuse formé de symboles modulant une pluralité de fréquences porteuses, pendant un intervalle de temps donné, **caractérisé en ce qu'**il comprend :

    - des premiers moyens de calcul, pour chacun desdits symboles et chacune desdites porteuses, d'une première information $\hat{\tilde{H}}_{n_0,k_0}$ représentative d'une estimation de la réponse du canal de transmission, n0 représentant l'instant d'émission et k0 représentant ladite fréquence porteuse, assurant les opérations suivantes :

        - calcul d'une première donnée de démodulation $\hat{H}_{n,0k}, \phi_{n0,k}$, correspondant au produit d'un terme correspondant à l'estimation de la réponse du canal de transmission et d'un terme correspondant à l'estimation de la distorsion blanche en fréquence ;
        - suppression dudit terme correspondant à l'estimation de la distorsion blanche en fréquence, en tenant compte de porteuses de référence Pn,k connues des récepteurs, réparties en quinconce parmi les porteuses émises, à des instants et sur des fréquences porteuses prédéterminés, de façon qu'au moins certaines desdites fréquences porteuses portent régulièrement des éléments de référence, à des instants différents pour des fréquences porteuses voisines, puis en appliquant un filtrage d'interpolation comprenant :

            - un filtrage d'interpolation temporelle, pour chacune desdites fréquences porteuses portant des éléments de référence, de façon à associer à chaque porteuse placée entre deux éléments de référence sur ladite fréquence porteuse une donnée intermédiaire $\hat{D}_{n0,k}$,
            - un filtrage d'interpolation fréquentielle, pour chacun desdits intervalles de temps, desdites données intermédiaires $D_{n0,k}$, de façon à produire ladite première information $\hat{\tilde{H}}_{n_0,k_0}$,

        - détermination, pour chacun desdits intervalles de temps, d'une seconde information $\hat{\tilde{\phi}}_{n_0}$ représentative d'une estimation de la distorsion blanche en fréquence, en tenant compte desdits symboles de référence ; et

- division de chaque symbole à démoduler $Y_{n0,k0}$ par ladite première information $\hat{\hat{H}}_{n_0,k_0}$ et par ladite seconde information $\hat{\hat{\phi}}_{n_0}$, pour délivrer un symbole estimé $\hat{C}_{n0,k0}$.

**Patentansprüche**

1. Verfahren zum Demodulieren eines Mehrfachträgersignals, das aus einer zeitlichen Folge von Symbolen gebildet wird, die während eines gegebenen Zeitintervalls eine Vielzahl von Trägerfrequenzen modulieren,
   **dadurch gekennzeichnet, dass** es die folgenden Schritte umfasst:

   - Bestimmung, für jedes dieser Symbole und jeden dieser Träger, einer ersten Information $\hat{\hat{H}}_{n_n,k_0}$, welche für eine Schätzung der Antwort des Sendekanals repräsentativ ist, wobei $n_0$ den Index des Sendezeitpunktes und $k_0$ den Index dieser Trägerfrequenz darstellt, die folgenden Unterschritte umfassend:

     - Berechnung eines ersten Datenwertes für die Demodulierung $\hat{H}_{n0,k}$, $\phi_{n0,k}$, der dem Produkt eines der Schätzung der Antwort des Sendekanals entsprechenden Terms mit einem der Schätzung der weißen Frequenzverzerrung entsprechenden Terms entspricht;
     - Beseitigung des der weißen Frequenzverzerrung entsprechenden Terms, wobei Referenz-Trägerfrequenzen Pn,k, die den Empfängern bekannt und die versetzt (in Quincunx) unter den gesendeten Trägerfrequenzen verteilt sind, zu im Voraus bestimmten Zeitpunkten und bei im Voraus bestimmten Trägerfrequenzen berücksichtigt werden, so dass mindestens einige der besagten Trägerfrequenzen regelmäßig Referenzelemente zu verschiedenen Zeitpunkten für benachbarte Trägerfrequenzen tragen, gefolgt von der Anwendung einer folgendes umfassenden interpolationsfilterung:

       - eine zeitliche Interpolationsfilterung für jede der erwähnten, Referenzelemente tragenden Trägerfrequenzen, so dass einer jeden Trägerfrequenz, die auf der besagten Trägerfrequenz zwischen zwei Referenzelementen platziert ist, ein Zwischenwert $D_{n0,k}$ zugeordnet wird,
       - eine Interpolationsfilterung nach der Frequenz dieser Zwischenwerte $D_{n0,k}$ für jedes der besagten Zeitintervalle, um die erwähnte erste Information $\hat{\hat{H}}_{n_n,k_n}$ zu erzeugen,

   - Bestimmung, für jedes dieser Zeitintervalle, einer zweiten Information $\hat{\hat{\phi}}_{n_n}$, die für eine Schätzung der weißen Frequenzverzerrung repräsentativ ist, wobei die Referenzsymbole berücksichtigt werden, und

   - Teilung eines jeden der zu demodulierenden Symbole $Y_{n0\text{-}k0}$ durch die erste Information $\hat{\hat{H}}_{n_0,k_n}$ und durch die zweite Information $\hat{\hat{\phi}}_{n_0}$, um ein geschätztes Symbol $\hat{C}_{n0,k0}$ zu liefern.

2. Verfahren nach Anspruch 1,
   **dadurch gekennzeichnet, dass** der Schritt der Interpolationsfilterung nach der Frequenz einen Filter mit endlicher Impulsantwort der Länge $N$ anwendet, der in etwa der Wiederholungsperiode der Referenzelemente auf einer gegebenen Trägerfrequenz gleicht.

3. Verfahren nach einem der Ansprüche 1 oder 2,
   **dadurch gekennzeichnet, dass** die erwähnte zweite Information $\hat{\hat{\phi}}_{n_u}$ auf der Grundlage der Teilung $\delta_{n0+i,k}$ des Zwischenwertes $\hat{D}_{n0+i,k}$ durch die erste Information $\hat{\hat{H}}_{n_0,k_n}$ erhalten wird.

4. Verfahren nach Anspruch 3,
   **dadurch gekennzeichnet, dass** i einen der Werte -1, 0 oder 1 annimmt.

5. Verfahren nach einem der Ansprüche 3 oder 4,

   **dadurch gekennzeichnet, dass** die zweite Information $\hat{\hat{\phi}}_{n_n}$ ein gewichteter Mittelwert von mindestens zwei der erwähnten Teilungen $\delta_{n0+i,k}$ ist.

6. Verfahren nach Anspruch 5,

   **dadurch gekennzeichnet, dass** die zweite Information $\hat{\hat{\phi}}_{n_n}$ den folgenden Wert aufweist:

$$\hat{\hat{\phi}}_{n_n+l} = \frac{\sum_k \alpha_k \cdot \delta_{n_n+t,k}}{\sum_k \alpha_k}$$

   wobei:

$$\alpha_k = \left\| \hat{\hat{H}}_{n_n,k_n} \right\|^2 .$$

7. Vorrichtung zum Demodulieren eines Mehrfachträgersignals, das aus Symbolen gebildet wird, die während eines gegebenen Zeitintervalls eine Vielzahl von Trägerfrequenzen modulieren,
   **dadurch gekennzeichnet, dass** sie folgendes umfasst:

   - erste Mittel zum Berechnen, für jedes der besagten Symbole und jede der besagten Träger, einer ersten Information $\hat{\hat{H}}_{n_u,k_n}$, die für eine Schätzung der Antwort des Serdekanals repräsentativ ist, wobei $n_0$ den Sendezeitpunkt und $k_0$ die erwähnte Trägerfrequenz darstellt, wobei diese Mittel die folgenden Operationen sicherstellen:

      - Berechnung eines ersten Datenwertes für die Demodulierung $\hat{H}_{n0,k},\phi_{n0,k}$, der dem Produkt eines der Schätzung der Antwort des Sendekanals entsprechenden Terms mit einem der Schätzung der weißen Frequenzverzerrung entsprechenden Terms entspricht;
      - Beseitigung des der weißen Frequenzverzerrung entsprechenden Terms, wobei Referenz-Trägerfrequenzen Pn,k, die den Empfängern bekannt und die versetzt (in Quincunx) unter den gesendeten Trägerfrequenzen verteilt sind, zu im Voraus bestimmten Zeitpunkten und bei im Voraus bestimmten Trägerfrequenzen berücksichtigt werden, so dass mindestens einige der besagten Trägerfrequenzen regelmäßig Referenzelemente zu verschiedenen Zeitpunkten für benachbarte Trägerfrequenzen tragen, gefolgt von der Anwendung einer folgendes umfassenden Interpolationsfilterung:

         - eine zeitliche Interpolationsfilterung für jede der erwähnten, Referenzelemente tragenden Trägerfrequenzen, so dass einer jeden Trägerfrequenz, die auf der besagten Trägerfrequenz zwischen zwei Referenzelementen platziert ist, ein Zwischenwert $D_{n0,k}$ zugeordnet wird
         - eine Interpolationsfilterung nach der Frequenz dieser Zwischenwerte $D_{n0,k}$ für jedes der besagten Zeitintervalle, um die erwähnte erste Information $\hat{\hat{H}}_{n_n,k_n}$ zu erzeugen,

   - Bestimmung, für jedes dieser Zeitintervalle, einer zweiten Information $\hat{\hat{\phi}}_{n_u}$, die für eine Schätzung der weißen Frequenzverzerrung repräsentativ ist, wobei die Referenzsymbole berücksichtigt werden, und

   - Teilung eines jeden der zu demodulierenden Symbole $Y_{n0,k0}$ durch die erste Information $\hat{\hat{H}}_{n_n,k_n}$ und durch die zweite Information $\hat{\hat{\phi}}_{n_n}$, um ein geschätztes Symbol $\hat{C}_{n0,k0}$ zu liefern.

**Claims**

1. Method for demodulating a multicarrier signal made up of a temporal sequence of symbols modulating a plurality of carrier frequencies, over a given time interval, **characterised in that** it includes the following steps:

   - determination, for each of the said symbols and each of the said carriers, of a first information item $\hat{\hat{H}}_{n_0,k_0}$

   representing an estimation of the transmission channel response, where $n_0$ represents the index of the instant of transmission and $k_0$ represents the index of the said carrier frequency, including the following sub-steps:

   - calculation of a first demodulation data item $H_{n0,k}\cdot\hat{\phi}_{n0,k}$, corresponding to the product of a term corresponding to the estimation of the transmission channel response and a term corresponding to the estimation of the white frequency distortion;
   - suppression of the said term corresponding to the estimation of the white frequency distortion, taking into account reference carriers $P_{n,k}$ that are known to the receivers, and distributed in a quincunx manner among the transmitted carriers, at predetermined instants and on predetermined carrier frequencies, such that at least some of the said carrier frequencies regularly carry reference items, at instants that are different for neighbouring carrier frequencies, then by applying interpolation filtering including:

      - time-domain interpolation filtering, for each of the said carrier frequencies carrying reference items, so as to associate with each carrier placed between two reference items on the said carrier frequency an intermediate data item $\hat{D}_{n0,k}$,
      - frequency-domain interpolation filtering, for each of the said time intervals, of the said intermediate data items $\hat{D}_{n0,k}$, so as to produce the said first information item $\hat{\hat{H}}_{n_0,k_0}$,

   - determination, for each of the said time intervals, of a second information item $\hat{\hat{\phi}}_{n_0}$ representing an estimation of the white frequency distortion, taking into account the said reference syr $\hat{\hat{\phi}}$ nd
   - division of each symbol to be demodulated $Y_{n0,k0}$ by the said first information item $\hat{\hat{H}}_{n_0,k_0}$ and by the said second information item $\hat{\hat{\phi}}_{n_0}$ in order to deliver an estimated symbol $\hat{C}_{n0,k0}$.

2. Method according to Claim 1, **characterised in that** the said frequency-domain interpolation filtering step employs a finite impulse response filter of length N approximately equal to the period of repetition of reference items on a given carrier frequency.

3. Method according to either of Claims 1 and 2,

   **characterised in that** the said second information item $\hat{\hat{\phi}}_{n_0}$ is obtained from the division $\delta_{n0+nk}$ of the intermediate data item $\hat{D}_{n0+i,k}$ by the said first information item $\hat{\hat{H}}_{n_0,k_0}$.

4. Method according to Claim 3, **characterised in that** i is -1, 0 or 1.

5. Method according to either of Claims 3 and 4,

   **characterised in that** the said second information item $\hat{\hat{\phi}}_{n_0}$ is a weighted average of at least two of the said divisions $\delta_{n0+i,k}$.

6. Method according to Claim 5, **characterised in that** the said second information item $\hat{\hat{\phi}}_{n_0}$ is given by:

$$\hat{\hat{\phi}}_{n_0+i} = \frac{\sum_k \alpha_k \cdot \hat{\delta}_{n_0+i,k}}{\sum_k \alpha_k}$$

where:

$$\alpha_k = \left\| \hat{\hat{H}}_{n_0,k_0} \right\|^2$$

7. Device for demodulating a multicarrier signal made up of symbols modulating a plurality of carrier frequencies, over a given time interval, **characterised in that** it includes:

- first calculation means, for each of the said symbols and each of the said carriers, for calculating a first information item $\hat{\hat{H}}_{n_0,k_0}$ representing an estimation of the transmission channel response, where $n_0$ represents the instant of transmission and $k_0$ represents the said carrier frequency, providing the following operations:

- calculation of a first demodulation data item $\hat{H}_{n0,k} \cdot \phi_{n0,k}$ corresponding to the product of a term corresponding to the estimation of the transmission channel response and a term corresponding to the estimation of the white frequency distortion;
- suppression of the said term corresponding to the estimation of the white frequency distortion, taking into account reference carriers $P_{n,k}$ that are known to the receivers, and distributed in a quincunx manner among the transmitted carriers, at predetermined instants and on predetermined carrier frequencies, such that at least some of the said carrier frequencies regularly carry reference items, at instants that are different for neighbouring carrier frequencies, then by applying interpolation filtering including:

- time-domain interpolation filtering, for each of the said carrier frequencies carrying reference items, so as to associate with each carrier placed between two reference items on the said carrier frequency an intermediate data item $\hat{D}_{n0,k}$,
- frequency-domain interpolation filtering, for each of the said time intervals, of the said intermediate data items $\hat{D}_{n0,k}$ so as to produce the said first information item $\hat{\hat{H}}_{n_0,k_0}$,

- determination, for each of the said time intervals, of a second information item $\hat{\hat{\phi}}_{n_0}$ representing an estimation of the white frequency distortion, taking into account the said reference symbols; and

- division of each symbol to be demodulated $Y_{n0,k0}$ by the said first information item $\hat{\hat{H}}_{n_0,k_0}$ and by the said second information item $\hat{\hat{\phi}}_{n_0}$ in order to deliver an estimated symbol $\hat{C}_{n0,k0}$.

Fig. 1

Porteuses (f)

Symboles (t)

N=8

K=4

(no,ko-16)

(no,ko)

(no,k1)

(no,k2)

(no,k3)

(no,k4)

(no,k5)

• Porteuses utiles

✗ Pilotes

## Fig. 2

Porteuses (f)

Symboles (t)

N=8

K=2

(no,ko)

(no,k1)

• Porteuses utiles

✗ Pilotes

## Fig. 3

Fig. 4

16